# EUROPÄISCHE PATENTANMELDUNG

(11) **EP 4 538 150 A1**
(43) Veröffentlichungstag der Anmeldung: **16.04.2025**
(21) Anmeldenummer: 24204320.6
(22) Anmeldetag: 02.10.2024
(51) Int. Cl.: B62D 21/20, B62D 35/02

(54) **FAHRZEUGANHÄNGER MIT UNTERBODENVERKLEIDUNG**

(30) Priorität: 12.10.2023 DE 202023105909 U
(71) Anmelder: Knott GmbH, D-83125 Eggstätt (DE)
(72) Erfinder: STRASSER, Josef, 83257 Gstadt am Chiemsee (DE)
(74) Vertreter: Flach Bauer & Partner Patentanwälte mbB

(57) **Zusammenfassung**

Die Erfindung betrifft einen Fahrzeuganhänger 10, insbesondere ein PKW-Anhänger, und ein Unterbodenverkleidungssystem 1. Der Fahrzeuganhänger 10 umfasst einen Tragrahmen 12 und eine Deichsel 14 sowie zumindest eine Radachse 16a, 16b. Der Tragrahmen 12 ist mit der Deichsel 14 und der zumindest einen Radachse 16a, 16b verbunden und dazu eingerichtet, einen Anhängeraufbau 18 zu tragen. Der Fahrzeuganhänger 10 umfasst weiterhin eine Unterbodenverkleidung 100, wobei die Unterbodenverkleidung 100 so am Tragrahmen (12) angeordnet ist, dass eine Unterseite 20 des Fahrzeuganhängers 10 zumindest teilweise flächig verkleidet ist.

## Beschreibung

### Gebiet der Erfindung

Die vorliegende Erfindung betrifft einen Fahrzeuganhänger mit einer Unterbodenverkleidung sowie ein Unterbodenverkleidungssystem.

### Hintergrund

Fahrzeuganhänger, insbesondere Pkw-Anhänger, sind grundsätzlich bekannt. Beispielsweise werden Fahrzeuganhänger zum Transport von Gütern eingesetzt. Ebenso kommen Fahrzeuganhänger im Freizeitbereich zum Einsatz. Hierzu zählen beispielsweise Pferdeanhänger und Campinganhänger, die auch als Caravans bezeichnet werden.

Der derzeitige Wandel des Automobilsektors von Verbrennungsmotoren hin zu alternativen Antrieben, insbesondere Elektroantrieben beeinflusst die Designprinzipien von Fahrzeuganhängern. Derzeit kommerziell verfügbare Elektrofahrzeuge weisen gegenüber herkömmlichen Verbrennungsfahrzeugen eine verringerte Reichweite auf. Dies gilt insbesondere dann, wenn das Fahrzeug einen Anhänger zieht. Zudem müssen Elektrofahrzeuge an entsprechenden Ladestationen über einen längeren Zeitraum aufgeladen werden, wenn die mitgeführten Batterien leer sind. Bei Verbrennungsfahrzeugen kann hingegen in relativ kurzer Zeit Kraftstoff nachgetankt werden. Dies führt zu verlängerten Reisezeiten.

Ein aktuelles Entwicklungsziel in der Elektromobilität ist daher die Reichweitensteigerung. Dies wird durch verbesserte Batterien versucht zu erreichen, als auch durch die Senkung des Energieverbrauchs der Fahrzeuge.

Um Fahrzeuganhänger sinnvoll mit Elektrofahrzeugen nutzen zu können, ist es auch notwendig die Fahrzeuganhänger zu optimieren. Um energieeffizienter zu werden, werden die Fahrzeuganhänger beispielsweise so leicht wie möglich konstruiert. Ein weiterer wichtiger Baustein zur Verbesserung der Effizienz ist die Reduktion des Luftwiderstands.

### Beschreibung der Erfindung

Es ist daher die Aufgabe der vorliegenden Erfindung einen Fahrzeuganhänger zu schaffen, der gegenüber herkömmlichen Fahrzeuganhängern energieeffizienter mitgeführt werden kann. Zudem ist es die Aufgabe der vorliegenden Erfindung ein Unterbodenverkleidungssystem für Fahrzeuganhänger bereitzustellen, welches die Fahrzeuganhänger energieeffizienter macht.

Diese Aufgabe wird durch einen Fahrzeuganhänger gemäß Anspruch 1 und durch ein Unterbodenverkleidungssystem nach Anspruch 16 gelöst. Weitere Aspekte der Erfindung sind in den Unteransprüchen genannt sowie in der nachfolgenden Beschreibung beschrieben.

Insbesondere wird die Aufgabe durch einen Fahrzeuganhänger, beispielsweise einen PKW-Anhänger gelöst, welcher einen Tragrahmen und eine Deichsel, sowie zumindest eine Radachse umfasst. Der Fahrzeuganhänger kann ein zulässiges Maximalgewicht von 3.5 Tonnen aufweisen. Der Tragrahmen ist mit der Deichsel und der zumindest einen Radachse verbunden. Zudem ist der Tragrahmen dazu eingerichtet einen Anhängeraufbau zu tragen.

Die Deichsel bildet eine Zugvorrichtung des Fahrzeuganhängers. Sie trägt eine Anhängerkupplung, die dazu dient den Fahrzeuganhänger mit einer entsprechenden Anhängerkupplung eines Zugfahrzeugs zu koppeln. Zudem kann an der Deichsel, insbesondere an der Anhängerkupplung eine Bremsvorrichtung, insbesondere eine Auflaufbremsvorrichtung vorgesehen sein, die mit Radbremsen des Fahrzeuganhängers verbunden ist.

Der Tragrahmen ist typischerweise ein Metallrahmen, wie beispielsweise ein Stahl- oder Aluminiumrahmen. Er bildet das Grundgerüst des Fahrzeuganhängers. Die zumindest eine Radachse dient der Aufhängung zumindest eines Rades. Die Achse kann eine starre Achse sein, die zwei Räder trägt. Ebenso können die Räder des Fahrzeuganhängers unabhängig aufgehängt sein, sodass jedem Rad eine Radachse zugeordnet ist. Der Fahrzeuganhänger kann zumindest zwei Räder umfassen. Die Anzahl der Räder ist jedoch nicht beschränkt.

Der Anhängeraufbau kann ein Campingaufbau, insbesondere ein Caravanaufbau sein. Ebenso kann der Anhängeraufbau ein Pferdetransport-, ein Schiffs- oder Bootstransport- oder ein Materialtransportaufbau sein.

Der erfindungsgemäße Fahrzeuganhänger umfasst eine Unterbodenverkleidung. Diese Unterbodenverkleidung kann durch das nachfolgend beschriebene Unterbodenverkleidungssystem bereitgestellt sein. Die Unterbodenverkleidung ist so am Tragrahmen angeordnet, dass eine Unterseite des Fahrzeuganhängers zumindest teilweise flächig verkleidet ist. Vorzugsweise sind zumindest 70% der Unterseite, oder zumindest 80% der Unterseite, oder zumindest 90% der Unterseite, oder zumindest 99% der Unterseite oder die gesamte Unterseite des Fahrzeuganhängers flächig verkleidet.

Diese zumindest teilweise flächige Verkleidung führt dazu, dass an der Unterseite des Fahrzeugs weniger Luftverwirbelungen entstehen und die Luft vorzugsweise gezielt unter dem Fahrzeuganhänger geleitet wird. Denn insbesondere der Tragrahmen, der bei konventionellen Fahrzeuganhängern zu einem zerklüfteten, unregelmäßigen Unterboden führt, kann durch die Unterbodenverkleidung weitestgehend überdeckt werden. Dies führt zu einem reduzierten Luftwiderstand (bzw. Strömungswiderstand). Somit kann der Fahrzeuganhänger energieeffizient gezogen werden. Dadurch reduziert sich der Kraftstoffverbrauch (und somit der CO2 Ausstoß) und es wird eine höhere Reichweite erzielt.

In einem weiteren Aspekt kann die Unterbodenverkleidung weiterhin an der Deichsel, insbesondere an Zugholmen der Deichsel angeordnet sein. Somit kann auch die Unterseite der Deichsel zumindest teilweise flächig verkleidet sein. Vorzugsweise sind zumindest 70% der Unterseite, oder zumindest 80% der Unterseite, oder zumindest 90% der Unterseite, oder zumindest 99% der Unterseite oder die gesamte Unterseite der Deichsel flächig verkleidet.

Weiterhin kann die Unterbodenverkleidung in zumindest einem lateralen Bereich der Deichsel einen im Wesentlichen schräg nach oben verlaufenden Unterbodenverkleidungsabschnitt aufweisen. Vorzugsweise sind zwei solche schräg nach oben verlaufenden Unterbodenverkleidungsabschnitte vorgesehen. Ein erster schräg nach oben verlaufender Unterbodenverkleidungsabschnitt kann in Fahrtrichtung gesehen links und ein zweiter schräg nach oben verlaufender Unterbodenverkleidungsabschnitt kann in Fahrtrichtung gesehen rechts angeordnet sein, sodass eine Mittelachse der Deichsel zwischen diesen schräg nach oben verlaufenden Unterbodenverkleidungsabschnitten angeordnet ist. Somit ergibt sich im Bereich der Deichselunterseite eine schiffsrumpfartige Form, die sich durch eine besonders gute Reduzierung des Luftwiderstands auszeichnet. Zudem formen die schräg nach oben verlaufenden Unterbodenverkleidungsabschnitte an der Deichsel einen Raum, der ein Bremsgestänge, eine Auflaufbremsvorrichtung und/oder dergleichen aufnehmen und vor äußeren Einflüssen, wie Stößen, Feuchtigkeit und/oder Verschmutzung, schützen kann. Mithin kann ein wartungsarmer und zuverlässiger gebremster Fahrzeuganhänger bereitgestellt werden.

Weiterhin kann in der Unterbodenverkleidung (d.h. an der Unterseite des Fahrzeuganhängers, insbesondere auch der Unterseite der Deichsel) zumindest eine Öffnung vorgesehen sein. Diese Öffnung ist vorzugsweise verschließbar. Mithin beeinflusst die Öffnung (im geschlossenen Zustand) den Luftwiderstand des Fahrzeuganhängers nicht oder nur kaum.

Die Öffnung ermöglicht einen Zugang zu einem Stauraum und/oder zu technischen Komponenten des Fahrzeuganhängers. Der Stauraum kann zwischen der Unterbodenverkleidung und einem Anhängeraufbau gebildet sein. In dem Stauraum können beispielsweise ein Reserverad, ein Wassertank, ein Abwassertank, eine Gasflasche, oder beliebige andere Gegenstände verstaut sein. Über die zumindest eine Öffnung können diese Gegenstände zugänglich sein oder entnommen werden. Technischen Komponenten, die über die zumindest eine Öffnung zugänglich sind, sind zum Beispiel eine Auflaufbremsvorrichtung, ein Stabilisierungssystem, eine Seilzugbalancevorrichtung, eine Achsausgleichseinstellungsvorrichtung, Leitungen (wie Gas-, Abwasser-, Wasser- und/oder Stromleitungen) und/oder dergleichen.

Zudem kann die Unterbodenverkleidung zumindest eine Luftleitstruktur aufweisen. Die Luftleitstruktur kann so an der Unterbodenverkleidung angeordnet sein, um Kühlluft zu zumindest einer Bremse und/oder einer Radachse des Fahrzeuganhängers zu leiten und/oder um die Bildung von Luftwirbeln an den drehenden Rädern zu reduzieren oder zu verhindern. Somit kann ein Überhitzen der Bremsen vermieden werden und/oder der Luftwiderstand weiter reduziert werden.

Die Luftleitstruktur kann von der flächigen Verkleidung vorstehen und beispielsweise als Luftleitrippe, oder Luftleitkanal ausgeführt sein. Der Luftleitkanal kann zumindest drei Seiten umfassen. Ebenso kann der Luftleitkanal geschlossen sein. Zudem kann die Luftleitstruktur integriert sein und Luft an einer Lufteinlassöffnung auf der Unterseite des Fahrzeuganhängers aufnehmen und über einen Luftleitkanal, der zumindest teilweise oberhalb der flächigen Verkleidung angeordnet ist, zu der Bremse, der Radachse und/oder dem Rad leiten.

In einem Aspekt umfasst die Unterbodenverkleidung eine Schaumstruktur. Die Schaumstruktur ist vorzugsweise so in den Tragrahmen eingebracht, dass die Unterseite des Fahrzeuganhängers zumindest teilweise flächig verkleidet ist.

Die Schaumstruktur kann in den Tragrahmen im Wesentlichen im flüssigen Zustand eingebracht werden und sich erst nach der Einbringung verfestigen und/oder aufschäumen. Dies ermöglicht eine einfache Installation. Um die flächige Verkleidung herzustellen, kann überstehender und verfestigter Schaum anschließend abgetrennt werden und/oder die Unterseite kann jedenfalls während der Verfestigungszeit mit entsprechenden Plattenstrukturen abgedeckt sein, sodass sich die Schaumstruktur als flächige Verkleidung ausbildet.

Sollen in die Schaumstruktur Bauteile integriert werden, wie beispielsweise Luftleitkanäle, Leitungen und/oder Stauraumfächer, können diese vor dem Einbringen der Schaumstruktur an oder im Tragrahmen positioniert werden. Nach dem Verfestigen des Schaums sind die Bauteile in der Schaumstruktur zumindest teilweise integriert.

Die Schaumstruktur kann zumindest einen der folgenden Schäume umfassen: Polyurethanschaum, Polyethanschaum, Polystyrolschaum, Polyisocyanurschaum, Silkonschaum, und/oder dergleichen.

Die Verwendung einer Schaumstruktur führt zudem zu einer guten Isolierung des Tragrahmens und somit der Unterseite des Anhängeraufbaus. Dies ist insbesondere bei Campingaufbauten vorteilhaft.

Gemäß einem weiteren Aspekt der Erfindung umfasst die Unterbodenverkleidung zumindest eine Plattenstruktur und/oder zumindest eine Membranstruktur, wobei die zumindest eine Plattenstruktur und/oder Membranstruktur so an dem Tragrahmen befestigt ist, dass die Unterseite des Fahrzeuganhängers zumindest teilweise flächig verkleidet ist. Die Befestigung kann unmittelbar und/oder mittelbar (also über weitere Elemente) erfolgen.

Die Unterbodenverkleidung kann eine Platten- oder Membranstruktur umfassen, die die Unterseite des Fahrzeuganhängers zumindest teilweise flächig verkleidet.

Alternativ kann die Unterbodenverkleidung mehrere (zumindest zwei) Plattenstrukturen und/oder Membranstrukturen umfassen, die die Unterseite des Fahrzeuganhängers gemeinsam zumindest teilweise flächig verkleiden. Eine Kombination von Plattenstruktur(en) und Membranstruktur(en) ist ebenso möglich. Insbesondere kann die zumindest eine Plattenstruktur und/oder die zumindest eine Membranstruktur an die Form des Tragrahmens angepasst sein, oder an die Form des Tragrahmens anpassbar sein. Zudem kann in die Plattenstruktur und/oder die Membranstruktur die zumindest eine Öffnung eingebracht sein. Ebenso kann die zumindest seine Luftleitstruktur integral mit der Plattenstruktur und/oder die Membranstruktur ausgebildet sein, oder an dieser befestigt sein.

Weiterhin kann die Plattenstruktur und/oder die Membranstruktur zusammen mit dem Tragrahmen und/oder dem Anhängeraufbau einen Zwischenraum bilden, der zumindest teilweise als zusätzlicher Stauraum genutzt werden kann.

Die Unterbodenverkleidung kann zumindest ein Halteelement umfassen. Das Halteelement verbindet die zumindest eine Plattenstruktur und/oder zumindest eine Membranstruktur direkt oder indirekt mit dem Tragrahmen.

In einem Aspekt weist das Halteelement zumindest ein Befestigungselement auf. Das Befestigungselement kann beispielsweise als Hakenelement oder als Klammerelement ausgebildet sein. Insbesondere kann das Befestigungselement zumindest einen Rücksprung aufweisen, wobei das Befestigungselement in diesem Aspekt dazu eingerichtet ist mittels des zumindest einen Rücksprungs auf einen vorstehenden Abschnitt des Tragrahmens aufgesteckt zu werden.

Der Rücksprung kann so ausgebildet sein, dass das Befestigungselement im Wesentlichen in einer vertikalen Richtung auf den vorstehenden Abschnitt des Tragrahmens aufgesteckt wird und/oder der Rücksprung kann dabei so ausgebildet sein, dass das Befestigungselement im Wesentlichen in einer horizontalen Richtung, welche im Wesentlichen orthogonal zur Fahrtrichtung ist, auf den vorstehenden Abschnitt des Tragrahmens aufgesteckt wird.

Insbesondere kann das Befestigungselement mehrere Rücksprünge umfassen, wobei ein erster Rücksprung so ausgebildet ist, dass das Befestigungselement im Wesentlichen in einer vertikalen Richtung auf den vorstehenden Abschnitt des Tragrahmens aufgesteckt werden kann, und wobei ein zweiter Rücksprung so ausgebildet ist, dass das Befestigungselement im Wesentlichen in einer horizontalen Richtung, welche im Wesentlichen orthogonal zur Fahrtrichtung ist, auf den vorstehenden Abschnitt des Tragrahmens aufgesteckt werden kann. Somit kann das Befestigungselement auf unterschiedliche Weise auf einen vorstehenden Abschnitt des Tragrahmens aufgesteckt werden. Durch das Aufstecken wird das Befestigungselement am Tragrahmen befestigt.

In einem weiteren Aspekt umfasst das Befestigungselement ein Klemmmittel. Das Klemmmittel ist dazu eingerichtet das Befestigungselement an den vorstehenden Abschnitt des Tragrahmens zu klemmen. Somit kann die (gesteckte) Verbindung zwischen dem Tragrahmen und dem Halteelement gesichert werden. Die gesicherte Verbindung kann beispielsweise nur dann gelöst werden kann, wenn zuvor die Klemmung des Klemmmittels gelöst wurde.

Das Klemmmittel kann beispielsweise einen Gewindebolzenabschnitt umfassen, welcher in den, den vorstehenden Abschnitt des Tragrahmens aufnehmenden Rücksprung eingedreht werden kann, um den Tragrahmen zu klemmen. Insbesondere kann das Klemmmittel eine Schraube, beispielsweise eine Madenschraube, umfassen.

In einem weiteren Aspekt ist das Klemmmittel durch ein elastisches Element, wie eine Feder, vorgespannt, um das Befestigungselement an den vorstehenden Abschnitt des Tragrahmens zu klemmen.

Zudem kann das Befestigungselement mittelbar und/oder unmittelbar an der Plattenstruktur und/oder der Membranstruktur befestigt sein, sodass die Plattenstruktur und/oder der Membranstruktur mittels des Befestigungselements bzw. mittels des Halteelements an dem Tragrahmen befestigt werden kann. Insbesondere können einer Platten- oder Membranstruktur mehrere Befestigungselemente zugeordnet sein, sodass die Plattenstruktur und/oder die Membranstruktur mittels mehrerer Befestigungselemente an dem Tragrahmen befestigt werden kann.

In einem Aspekt kann die Membranstruktur elastisch sein und mittels des zumindest einen Halteelements bzw. des zumindest einen Befestigungselements an dem Tragrahmen so befestigt werden, dass die Membranstruktur gespannt wird.

In einem weiteren Aspekt kann das Halteelement und insbesondere das Befestigungselement des Haltelements einen Kederschienenabschnitt umfassen.

Entsprechend kann beispielsweise die Membranstruktur ein Kederelement umfassen.

Der Kederschienenabschnitt bietet eine mechanische Verbindung zwischen dem Halteelement und der Membranstruktur. Um die Verbindung herzustellen wird ein Kederelement der Membranstruktur in eine Kedernut des Kederschienenabschnitts eingeführt.

Das Kederelement wird beispielsweise durch einen verstärkten Rand der Membranstruktur gebildet. Beispielsweise ist ein rundes oder zylindrisches Element, in einen Randbereich der Membranstruktur eingebracht oder dort aufgebracht. Beispielsweise kann ein Seil- oder Kunststoffprofil in die Membranstruktur an- bzw. eingenäht sein, oder in sonstiger Weise, z.B. durch Schweißen, Nieten, ..., verbunden sein.

Der Kederschienenabschnitt weist eine längliche Kedernut auf, die so gestaltet ist, dass das Kederelement hineingeschoben werden kann. Die Kedernut verjüngt sich zu ihrer Öffnung hin, sodass ein Rücksprung gebildet wird und das Kederelement (bzw. die Membranstruktur) sicher gehalten wird, wenn das Kederelement in die Nut eingeführt wurde.

Durch das Zusammenspiel von Kederelement und Kederschiene entsteht eine sichere, dauerhafte und dennoch flexible Verbindung, die sich bei Bedarf schnell und einfach lösen oder anpassen lässt.

Weiterhin kann das Halteelement eine Befestigungsstrebe umfassen. Die Befestigungsstrebe kann dazu eingerichtet sein, die Plattenstruktur und/oder Membranstruktur zu halten. Die Plattenstruktur und/oder Membranstruktur kann also an der Befestigungsstrebe befestigt sein.

Die Befestigungsstrebe kann ein erstes Ende und ein zweites Ende aufweisen, welches dem ersten Ende gegenüberliegt, wobei ein Befestigungselement mit dem ersten und/oder zweiten Ende der Befestigungsstrebe verbunden ist, um die Befestigungsstrebe an dem Tragrahmen zu befestigen. Über das Befestigungselement und die Befestigungsstrebe kann die Plattenstruktur und/oder Membranstruktur an dem Tragrahmen befestigt werden.

In einem Aspekt umfasst die Befestigungsstrebe ein erstes Strebenteil und ein zweites Strebenteil, wobei das erste Strebenteil relativ zum zweiten Strebenteil verschiebbar eingerichtet ist, um die Länge der Befestigungsstrebe einzustellen. Zudem kann das erste Strebenteil relativ zum zweiten Strebenteil festlegbar eingerichtet sein, um eine eingestellte Länge der Befestigungsstrebe zu fixieren. Dies erlaubt es das Haltelement mittels der Befestigungsstrebe in den Tragrahmen einzuspannen und/oder die Befestigungsstrebe an eine Breite des Tragrahmens anzupassen. Insbesondere kann das Haltelement mittels der Befestigungsstrebe so am Tragrahmen befestigt werden, dass das Haltelement im Wesentlichen quer zur Fahrtrichtung des Fahrzeuganhängers orientiert ist.

In einem Aspekt der Erfindung ist die Befestigungsstrebe teleskopartig aufgebaut, sodass das erste Strebenteil zumindest teilweise in dem zweiten Strebenteil aufgenommen ist.

In einem Aspekt werden mehrere Haltelemente mit Befestigungsstreben an dem Tragrahmen angebracht, um die zumindest eine Plattenstruktur und/oder die zumindest eine Membranstruktur mit dem Tragrahmen an mehreren Stellen zu verbinden.

Zudem kann das Befestigungselement im Wesentlichen symmetrisch aufgebaut sein. Wird je ein Befestigungselement mit dem ersten und dem zweiten Ende der Befestigungsstrebe verbunden, kann mithin das gleiche Befestigungselement für beide Enden genutzt werden. Somit kann die Komplexität des Aufbaus verringert werden.

Der zumindest eine Rücksprung des Befestigungselements, welcher zum Aufstecken des Befestigungselements auf einen vorstehenden Abschnitt des Tragrahmens eingerichtet ist, kann ein sich verjüngender Rücksprung sein. Die Verjüngung kann optional mit zunehmender Tiefe des Rücksprungs, ausgehend von einer äußeren Oberfläche des Befestigungselements zunehmen, wobei die Tiefe des Rücksprungs eine Dimension des Rücksprungs in einer Richtung ist, die im Wesentlichen senkrecht zu einer Aufsteckrichtung des Befestigungselements orientiert ist. Diese Verjüngung kann als Ausformschräge dienen.

Zudem ermöglicht die Verjüngung, dass das Befestigungselement auf Teile des Tragrahmens oder der Deichsel aufgesteckt werden kann, die nicht in Fahrtrichtung orientiert sind. So kann beispielsweise das Befestigungselement auf einen vorstehenden Abschnitt eines Zugholms der Deichsel aufgesteckt werden, welcher Zugholm (und somit der vorstehende Abschnitt) schräg zur Fahrtrichtung orientiert ist, sodass eine Befestigungsstrebe mit der das Befestigungselement verbunden ist quer zur Fahrtrichtung orientiert werden kann.

Das Befestigungselement kann ein Spritzgussteil oder ein Druckgussteil sein. Insbesondere kann das Befestigungselement einen thermoplastischen Werkstoff, einen metallischen Werkstoff und/oder Verstärkungselemente umfassen. Beispielsweise kann das Befestigungselement ein faserverstärktes Kunststoffteil sein, oder ein Aluminium- oder Zink(druck)gussteil.

Die Verwendung von Zink oder Kunststoff ist bevorzugt, da so einer Korrosion mit verzinkten Teilen, wie sie bei Fahrzeuganhängern üblich sind (z.B. verzinkte Tragrahmen) vorgebeugt werden kann.

Die zumindest eine Plattenstruktur kann eine Kunststoffplatte und/oder ein Metallblech umfassen. Die Kunststoffplatte kann zudem faserverstärkt sein. Die Membranstruktur kann eine Kunststoffmembran umfassen, welche zudem faserverstärkt sein kann.

In einem Aspekt der steht die Unterbodenverkleidung seitlich und/oder heckseitig über den Tragrahmen des Fahrzeuganhängers über. Zudem kann die Unterbodenverkleidung zumindest bereichsweise an den Anhängeraufbau anschließen. Somit kann der Luftwiderstand weiter reduziert werden.

Die Aufgabe wird weiterhin durch ein Unterbodenverkleidungssystem zur Bereitstellung einer Unterbodenverkleidung für einen Fahrzeuganhänger gelöst, wobei der Fahrzeuganhänger ein Fahrzeuganhänger der oben beschriebenen Art sein kann. Das Unterbodenverkleidungssystem erlaubt es bei bestehenden Fahrzeuganhängern eine Unterbodenverkleidung nachzurüsten oder Fahrzeuganhänger mit einer Unterbodenverkleidung bereitzustellen.

Das Unterbodenverkleidungssystem zur Bereitstellung einer Unterbodenverkleidung umfasst zumindest eine Plattenstruktur und/oder zumindest eine Membranstruktur der oben beschriebenen Art. Die zumindest eine Plattenstruktur und/oder Membranstruktur ist so an einem Tragrahmen des Fahrzeuganhängers befestigbar, dass die Unterseite des Fahrzeuganhängers (10) zumindest teilweise flächig verkleidet ist.

Das Unterbodenverkleidungssystem kann weiterhin zumindest ein Halteelement der oben beschriebenen Art umfassen, wobei das Halteelement die zumindest eine

Plattenstruktur und/oder zumindest eine Membranstruktur direkt oder indirekt mit dem Tragrahmen verbinden kann.

Insbesondere kann das das Halteelement zumindest ein Befestigungselement aufweisen. Vorzugsweise weist das Befestigungselement zumindest einen Rücksprung auf und ist dazu eingerichtet, mittels des zumindest einen Rücksprungs auf einen vorstehenden Abschnitt des Tragrahmens aufgesteckt zu werden. Optional umfasst das Befestigungselement ein Klemmmittel (z.B. eine Madenschraube), welches dazu eingerichtet ist das Befestigungselement an den vorstehenden Abschnitt des Tragrahmens zu klemmen.

Zudem kann das Halteelement und insbesondere das Befestigungselement des Halteelements einen Kederschienenabschnitt umfassen.

Das Unterbodenverkleidungssystem kann zudem eine Schaumstruktur umfassen, wobei die Schaumstruktur vorzugsweise so in den Tragrahmen einbringbar ist, dass die Unterseite des Fahrzeuganhängers zumindest teilweise flächig verkleidet ist. Die Schaumstruktur kann mit der Plattenstruktur und/oder der Membranstruktur zusammenwirken und beispielsweise einen Bereich zwischen der Plattenstruktur und/oder der Membranstruktur und einem Anhängeraufbau (zumindest teilweise) ausfüllen. Ebenso ist es möglich, dass die Schaumstruktur neben der Plattenstruktur und/oder der Membranstruktur angeordnet ist und einen Bereich des Unterbodens flächig verkleidet.

### Kurze Beschreibung der Figuren

In den beigefügten Figuren ist sind spezifische Ausführungsformen der vorliegenden Erfindung dargestellt. Diese dienen dem Verständnis der Erfindung. Insbesondere zeigt
- Fig. 1: eine schematische Darstellung eines Fahrzeuganhängers und eines Zugfahrzeugs;
- Fig. 2: eine schematische Darstellung eines Fahrzeuganhängers mit einem Caravanaufbau;
- Fig. 3: eine schematische Untersicht eines Fahrzeuganhängers;
- Fig. 4: eine schematische Draufsicht auf einen Fahrzeuganhänger mit Unterbodenverkleidung;
- Fig. 5A-C: schematische Darstellungen eines Halteelements;
- Fig. 6: eine schematische Darstellung eines Befestigungselements;
- Fig. 7: eine schematische Untersicht eines Fahrzeuganhängers mit Unterbodenverkleidung;
- Fig. 8: eine schematische Detaildarstellung einer unterseitig verkleideten Deichsel;
- Fig. 9: eine schematische Detaildarstellung einer Luftleitstruktur;
- Fig. 10A: eine schematische Detaildarstellung einer Öffnung in der Unterbodenverkleidung;
- Fig. 10B: eine schematische Detaildarstellung einer verschlossenen Öffnung in der Unterbodenverkleidung;
- Fig. 11A: eine schematische Darstellung eines weiteren Befestigungselements;
- Fig. 11B: eine schematische Schnittdarstellung des Befestigungselements aus Fig. 11A;
- Fig. 12: eine schematische Darstellung eines weiteren Befestigungselements, und
- Fig. 13: eine schematische Darstellung eines noch weiteren Befestigungselements.

### Detaillierte Beschreibung der Figuren

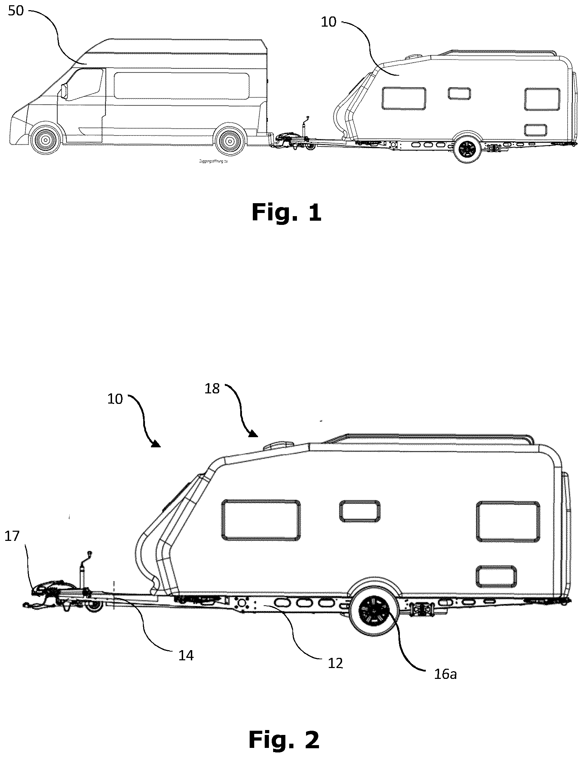

Figur 1 zeigt eine schematische Darstellung eines Fahrzeuganhängers 10 mit einem Zugfahrzeug 50. Das Zugfahrzeug kann ein elektrisch angetriebenes Zugfahrzeug, oder ein konventionelles Zugfahrzeug mit Verbrennungsmotor sein.

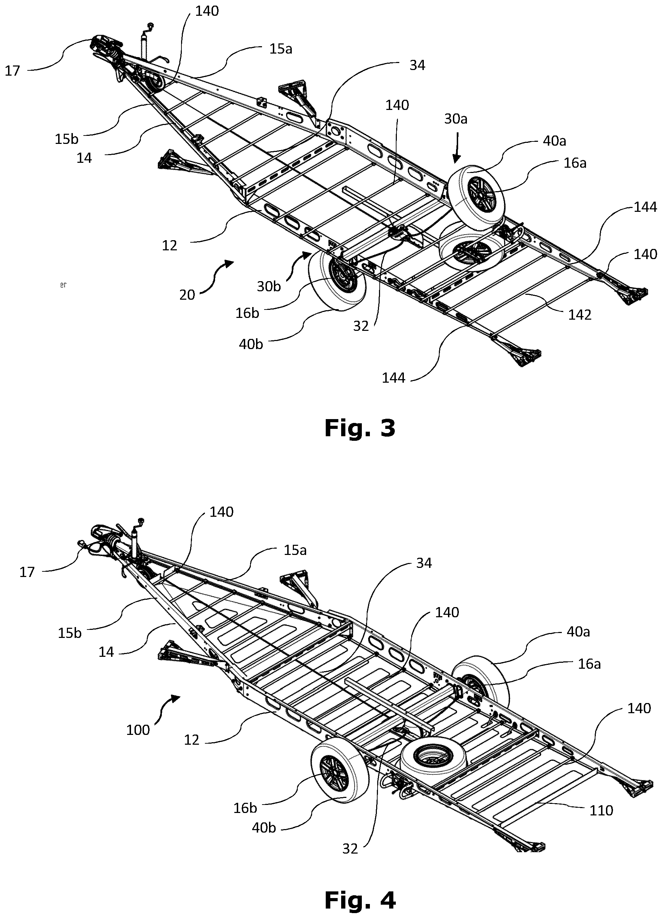

Figur 2 zeigt den Fahrzeuganhänger 10 aus Fig. 1 in einer vergrößerten Darstellung. Der Fahrzeuganhänger 10 umfasst einen Tragrahmen 12 und eine Deichsel 14. Der Tragrahmen 12 ist mit der Deichsel 14 so verbunden, dass der Fahrzeuganhänger mittels einer an der Deichsel 14 befestigten Kupplung 17 vom Zugfahrzeug gezogen werden kann. Der Tragrahmen 12 ist zudem mit zumindest einen Radachse 16a, 16b verbunden. Hier ist jeder Radachse 16a, 16b ein Rad 40a, 40b zugeordnet (s. insb. Fig. 3 und 4). Weiterhin ist der Tragrahmen 12 dazu eingerichtet einen Anhängeraufbau 18 zu tragen. In der gezeigten Darstellung ist der Anhängeraufbau 18 ein Caravanaufbau.

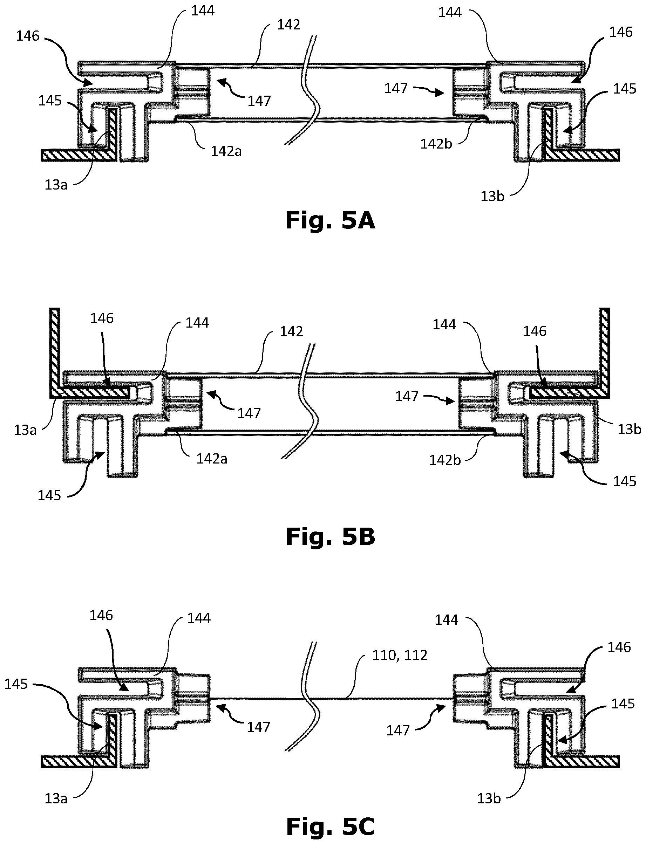

Fig. 3 zeigt eine schematische Untersicht des Fahrzeuganhängers 10. Der Anhängeraufbau ist in Fig. 3 nicht dargestellt. Um die Unterseite 20, d.h. den Unterboden, des Fahrzeuganhängers 10 zu verkleiden, können am Tragrahmen 12 eine Vielzahl von Halteelementen 140 vorgesehen sein. Exemplarische Halteelemente 140 sind mit Bezug auf die Figuren 5A bis 5C nochmals näher beschrieben.

Die Halteelemente 140 sind dazu eingerichtet eine Plattenstruktur 110 und/oder zumindest eine Membranstruktur der Unterbodenverkleidung 100 direkt oder indirekt mit dem Tragrahmen zu verbinden. In Figur 3 sind nur die Haltelemente 140 dargestellt, die Plattenstrukturen 110, die Unterseite 20 des Fahrzeuganhängers 10 zumindest teilweise flächig verkleiden sind nicht dargestellt.

In Fig. 4 ist eine schematische Draufsicht des Fahrzeuganhängers 10 dargestellt. Hier sind auch die Plattenstrukturen 110 gezeigt. Die Plattenstrukturen 110 verkleiden die Unterseite 20 des Fahrzeuganhängers 10 zumindest teilweise flächig, sodass sich dessen Luftwiderstand verringert. Die Plattenstrukturen 110 sind dabei an den Halteelementen 140 befestigt, welche wiederum am Tragrahmen 12 befestigt sind.

Wie zudem in Fig. 4 gezeigt ist, wird durch die Unterbodenverkleidung 100 zusätzlicher Stauraum generiert. Denn der Bereich zwischen den Plattenstrukturen 110 und einem Anhängeraufbau (also im Wesentlichen die Höhe des Tragrahmens 12) kann als zusätzlicher Stauraum genutzt werden. Hier können beispielsweise ein Reserverad, eine Gasflasche und/oder dergleichen mitgeführt werden.

Wie in Figur 4 ebenfalls gezeigt ist, ist die Unterbodenverkleidung 100 auch an der Deichsel 14, insbesondere an den Zugholmen 15a, 15b der Deichsel 14, angeordnet, sodass eine Unterseite der Deichsel 14 zumindest teilweise flächig verkleidet ist.

Die Unterbodenverkleidung 100 schafft so nicht nur einen geringen Luftwiderstand und optional zusätzlichen Stauraum, sondern kann auch Komponenten des Fahrzeuganhängers, wie Bremsen 30a, 30b, Bremsseile 32 und/oder ein Bremsgestänge 34 zumindest teilweise verkleiden und somit vor äußeren Einflüssen wie Verschmutzung schützen.

Die Plattenstrukturen 110 können aus einem Kunststoff oder aus Metallblechen gefertigt sein. Um die Plattenstrukturen zu versteifen, können in die Plattenstrukturen Versteifungselemente, wie Rippen oder Vertiefungen, 111 eingeprägt oder eingeformt sein.

In den Figuren 5A bis 5C sind Haltelemente 140 gezeigt. Das in den Figuren 5A und 5B gezeigte Halteelement umfasst zwei Befestigungselemente 144 und eine Befestigungsstrebe 142. Die Befestigungsstrebe 142 ist dazu eingerichtet eine Plattenstruktur 110 und/oder eine Membranstruktur, wie in Fig. 4 gezeigt, zu halten.

Die Befestigungsstrebe 142 weist ein erstes Ende 142a und ein zweites Ende 142b auf, welches dem ersten Ende 142a gegenüberliegt, wobei ein Befestigungselement 144 mit dem ersten Ende 142a und ein weiteres Befestigungselement 144 mit dem zweiten Ende 142b verbunden ist. Zur Verbindung mit dem ersten bzw. zweiten Ende der Befestigungsstrebe 142 kann an dem Befestigungselement ein Verbindungsabschnitt 147 vorgesehen sein. Der Verbindungsabschnitt 147 kann so ausgestaltet sein, dass er in die Befestigungsstrebe 142 endseitig eingeschoben werden kann und dort form-, stoff- und/oder kraftschlüssig mit der Befestigungsstrebe 142 verbunden werden kann.

Die hier gezeigten Befestigungselemente 144 weisen je zwei Rücksprünge auf. Der Rücksprung 145 ist so orientiert, dass das Befestigungselement 144 mittels des Rücksprungs 145 auf einen vertikal vorstehenden Abschnitt 13a, 13b des Tragrahmens 12 aufgesteckt werden kann, wie in Figur 5A gezeigt ist. Der Rücksprung 146 ist so orientiert, dass das Befestigungselement 144 mittels des Rücksprungs 146 auf einen horizontal vorstehenden Abschnitt 13a, 13b des Tragrahmens 12 aufgesteckt werden kann, wie in Figur 5B gezeigt ist. Umfasst das Befestigungselement 144 einen Rücksprung 145, der so orientiert, dass das Befestigungselement 144 mittels des Rücksprungs 145 auf einen vertikal vorstehenden Abschnitt 13a, 13b des Tragrahmens 12 aufgesteckt werden kann und einen Rücksprung 146, der so orientiert ist, dass das Befestigungselement 144 mittels des Rücksprungs 146 auf einen horizontal vorstehenden Abschnitt 13a, 13b des Tragrahmens 12 aufgesteckt werden kann, kann das Befestigungselement 144 universell, je nach Orientierung etwaiger vorstehender Abschnitte, am Tragrahmen 12 befestigt werden. Ebenso ist es möglich, dass das Befestigungselement 144 an die Geometrie des Tragrahmens (bzw. etwaiger vorstehender oder rückspringender Abschnitte) angepasst ist und mithin spezifisch am Tragrahmen 12 befestigt werden kann.

Die Befestigungsstrebe 142 kann ein erstes Strebenteil und ein zweites Strebenteil umfassen, wobei das erste Strebenteil relativ zum zweiten Strebenteil verschiebbar eingerichtet ist, um die Länge der Befestigungsstrebe 142 einzustellen. Zudem kann das erste Strebenteil relativ zum zweiten Strebenteil festlegbar eingerichtet sein, um eine eingestellte Länge der Befestigungsstrebe 142 zu fixieren. Dies erlaubt es das Haltelement 140 mittels der Befestigungsstrebe 142 in den Tragrahmen 12 einzuspannen und/oder die Befestigungsstrebe 142 an eine Breite des Tragrahmens 12 anzupassen (s. beispielsweise Fig. 4). Insbesondere kann das Haltelement 140 mittels der Befestigungsstrebe 142 so am Tragrahmen 12 befestigt werden, dass das Haltelement 12 im Wesentlichen quer zur Fahrtrichtung des Fahrzeuganhängers orientiert ist.

Die Befestigungsstrebe 142 kann beispielsweise teleskopartig aufgebaut sein, sodass das erste Strebenteil zumindest teilweise in dem zweiten Strebenteil aufgenommen ist.

In Figur 5C umfasst das Haltelement keine Befestigungsstrebe. Stattdessen sind Befestigungselemente 144 unmittelbar (mittels eines Verbindungsabschnitts 147) an einer Plattenstruktur 110 bzw. eine Membranstruktur 112 verbunden. Wie gezeigt ist, können die Befestigungselemente 144 beispielsweise mittels des Rücksprungs 145 auf einen vertikal vorstehenden Abschnitt des Tragrahmens 12 aufgesteckt werden, um die Plattenstruktur 110 bzw. die Membranstruktur 112 an dem Tragrahmen 12 zu befestigen und so eine Unterseite des Fahrzeuganhängers zumindest teilweise flächig verkleiden. Die Membranstruktur 112 kann flexibel ausgebildet sein und so dimensioniert sein, dass sie durch die am Tragrahmen angeordneten Befestigungselemente 144 gespannt wird.

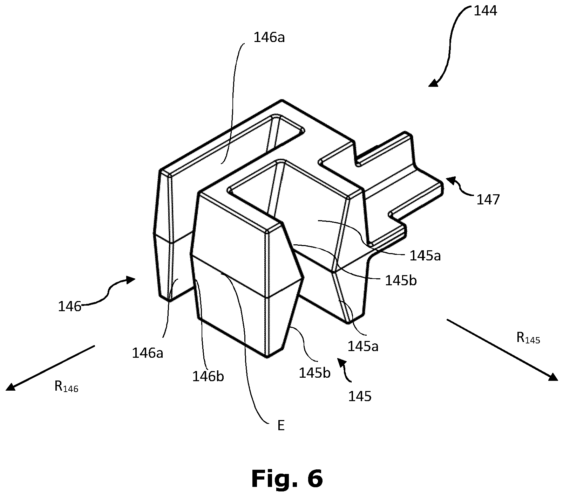

Figur 6 zeigt eine schematische Darstellung eines Befestigungselements 144. Das Befestigungselement 144 ist das in den Figuren 5A und 5B gezeigte Befestigungselement 144 und weist die zwei Rücksprünge 145, 146 auf. Somit kann das Befestigungselement auf unterschiedliche Weise auf einen vorstehenden Abschnitt 13a, 13b des Tragrahmens 12 aufgesteckt werden.

Das gezeigte Befestigungselement 144 ist im Wesentlichen symmetrisch aufgebaut. Die Symmetrieebene E erstreckt sich im eingebauten Zustand vertikal und orthogonal zur üblichen Fahrtrichtung. Der symmetrische Aufbau hat den Vorteil, dass das gleiche Befestigungselement für beide Enden der Befestigungsstrebe bzw. auf beiden Seiten einer Platten- bzw. Membranstruktur genutzt werden. Somit kann die Komplexität des Aufbaus des Haltelements verringert werden.

Die Rücksprünge 145, 146 können jeweils als sich verjüngende Rücksprünge ausgebildet sein. Die Verjüngung wird hier durch zwei sich gegenüberliegende Schrägen 145a, 145b bzw. 146a, 146b gebildet, sodass sich ein im Wesentlichen keilförmiger Rücksprung ergibt. In der gezeigten Ausführungsform ist das Befestigungselement 144 im Wesentlichen symmetrisch aufgebaut. Der Rücksprung 145 (ebenso Rücksprung 146) verjüngt sich also ausgehend von einer Oberfläche des Befestigungselements mit zunehmender Tiefe, sodass im Bereich der Symmetrieebene E der Rücksprung die maximale Verjüngung aufweist. Die Tiefe des Rücksprungs 145, 146 ist eine Dimension des Rücksprungs in einer Richtung, die im Wesentlichen senkrecht zu einer Aufsteckrichtung R₁₄₅, R₁₄₆ des Befestigungselements orientiert ist.

Die (symmetrische) Verjüngung erlaubt es, dass das Befestigungselement 144 auf Teile des Tragrahmens 12 oder der Deichsel 14 aufgesteckt werden kann, die nicht in Fahrtrichtung orientiert sind. So kann beispielsweise das Befestigungselement auf einen vorstehenden Abschnitt eines Zugholms 15a, 15b der Deichsel 14 aufgesteckt werden, welcher Zugholm 15a, 15b schräg zur Fahrtrichtung orientiert ist, sodass eine Befestigungsstrebe 142 mit der das Befestigungselement 144 verbunden ist quer zur Fahrtrichtung orientiert werden kann.

Das Befestigungselement 144 kann ein Spritzgussteil oder ein Druckgussteil sein, wobei die Schrägen 145a, 145b bzw. 146a, 146b als Ausformschrägen dienen. Beispielsweise können diese Schrägen um 3° bis 20° geneigt sein, oder um 5° bis 18° oder um 7° bis 13°.

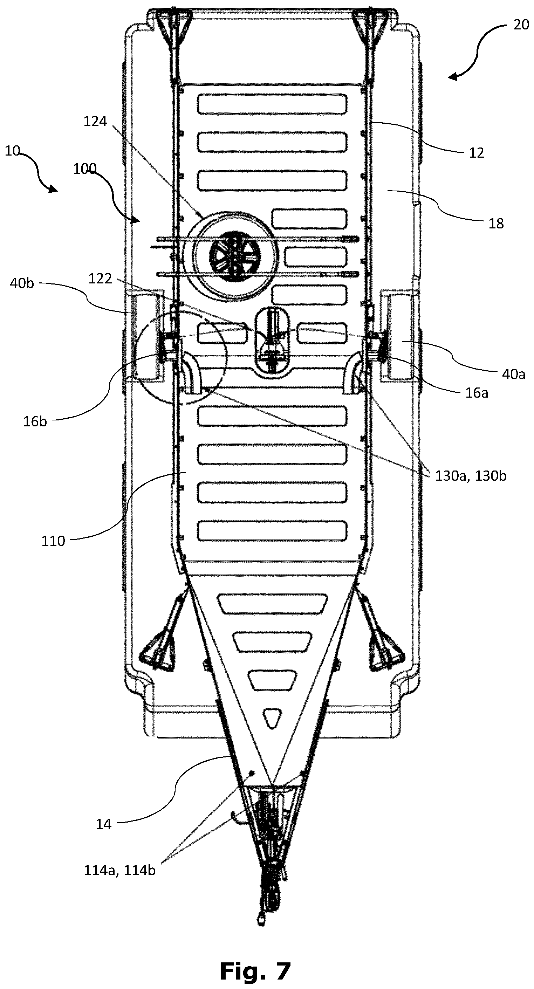

Fig. 7 ist eine schematische Untersicht eines Fahrzeuganhängers 10 mit Unterbodenverkleidung 100, die so am Tragrahmen 12 angeordnet ist, dass die Unterseite 20 des Fahrzeuganhängers 10 flächig verkleidet ist. Der Fahrzeuganhänger 10 aus Fig. 7 kann beispielsweise ein Caravananhänger sein, wie er in Fig. 2 dargestellt ist.

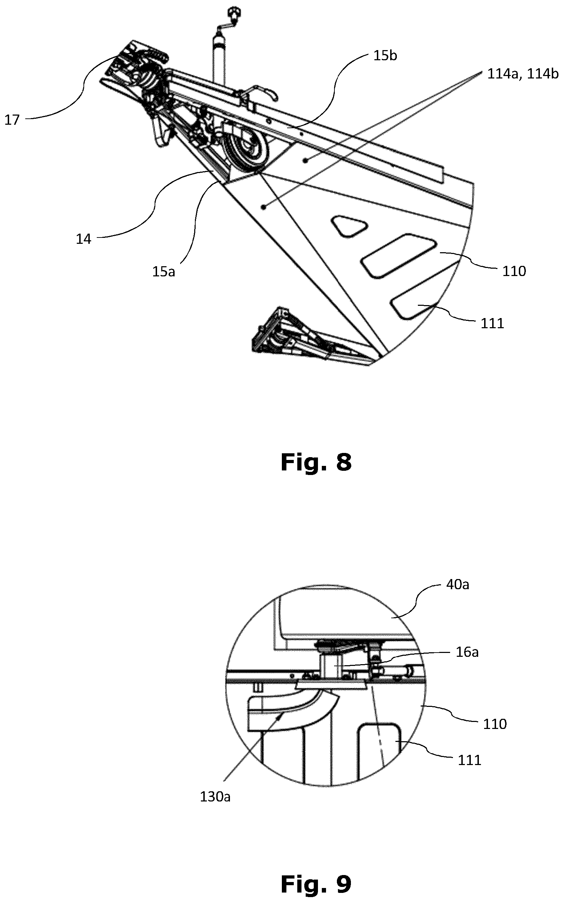

Die Unterbodenverkleidung 100 ist weiterhin an der Deichsel 14 angeordnet, sodass auch die Unterseite der Deichsel zumindest teilweise flächig verkleidet ist. Wie in der Detaildarstellung gemäß Figur 8 der unterseitig verkleideten Deichsel dargestellt ist, weist die Unterbodenverkleidung 100 in den lateralen Bereichen der Deichsel 14 je einen im Wesentlichen schräg nach oben verlaufenden Unterbodenverkleidungsabschnitt 114a, 114b auf.

Ein erster schräg nach oben verlaufender Unterbodenverkleidungsabschnitt 114a ist in Fahrtrichtung gesehen links und ein zweiter schräg nach oben verlaufender Unterbodenverkleidungsabschnitt 114b in Fahrtrichtung gesehen rechts angeordnet, sodass eine Mittelachse der Deichsel 14 zwischen diesen schräg nach oben verlaufenden Unterbodenverkleidungsabschnitten angeordnet ist. Somit ergibt sich im Bereich der Deichselunterseite eine schiffsrumpfartige Form, die sich durch eine besonders gute Reduzierung des Luftwiderstands auszeichnet. Zudem formen die schräg nach oben verlaufenden Unterbodenverkleidungsabschnitte 114a, 114b an der Deichsel 14 einen Raum, der u.a. das Bremsgestänge einer Auflaufbremsvorrichtung aufnehmen und vor äußeren Einflüssen schützen kann.

Wie insbesondere auch in der Detaildarstellung gemäß Figur 9 gezeigt ist, kann die Unterbodenverkleidung 100 Luftleitstrukturen 130a, 130b aufweisen. Diese Luftleitstrukturen 130a, 130b können beispielsweise an eine Plattenstruktur 110 angebracht oder integral mit der Plattenstruktur 110 ausgebildet sein. Die Luftleitstruktur 130a, 130b ist dabei so orientiert und geformt, dass Kühlluft zu zumindest einer Bremse und/oder einer Radachse 16a, 16b des Fahrzeuganhängers 10 geleitet wird. Ebenso ist es möglich, dass die Luftleitstruktur 130a, 130b so orientiert und geformt ist, dass zusätzlich oder alternativ die Bildung von Luftwirbeln an den drehenden Rädern 40a, 40b reduziert oder gar verhindert wird.

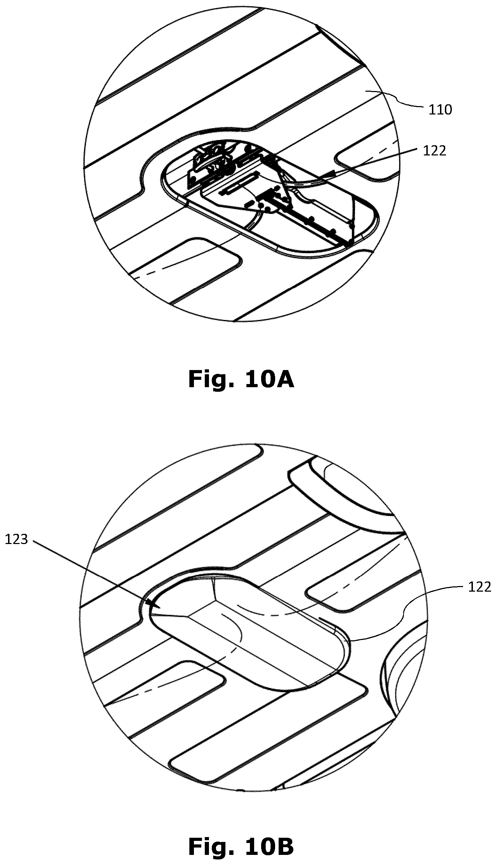

Wie die Figuren 7 und 10A, 10B zeigen, können in der Unterbodenverkleidung 100 Öffnungen 122, 124 vorgesehen sein. Die Öffnung 124 dient beispielsweise der Aufnahme eines Reserverades. Die Öffnung 122 gewährt Zugang zu technischen Komponenten des Fahrzeuganhängers 10, wie beispielsweise zu einem Stabilisierungssystem, einer Seilzugbalancevorrichtung, einer Achsausgleichseinstellungsvorrichtung, und/oder dergleichen.

Wie in Fig. 10B dargestellt ist, ist die Öffnung 122 verschließbar. Hierzu kann ein Verschluss 123 in oder auf die Öffnung 122 auf- bzw. eingesetzt werden.

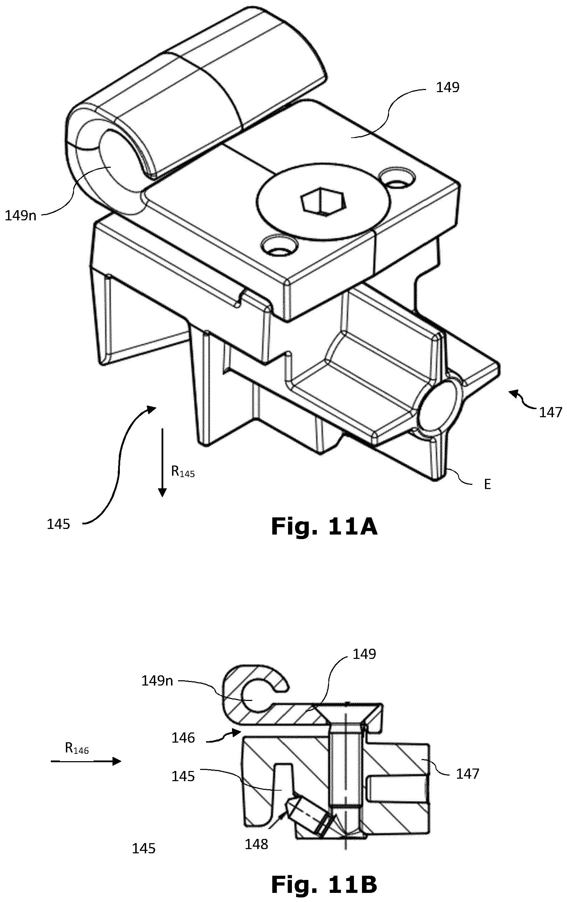

Figur 11A zeigt eine schematische Darstellung eines weiteren Befestigungselements 144 eines Halteelements. In Figur 11B ist eine Schnittdarstellung des Befestigungselements 144 gezeigt. Das Befestigungselement 144 kann, wie in den Figuren 5A und 5B gezeigt ist, mit einer Befestigungsstrebe 142 zusammenwirken. Ebenso ist es möglich, dass auf die Befestigungsstrebe 142 verzichtet wird.

Zur Verbindung einer Befestigungsstrebe 142 umfasst das Befestigungselement 144 optional einen Verbindungsabschnitt 147. Der Verbindungsabschnitt 147 kann so ausgestaltet sein, dass er in eine Befestigungsstrebe 142 endseitig eingeschoben werden kann und dort form-, stoff- und/oder kraftschlüssig mit der Befestigungsstrebe 142 verbunden werden kann.

Das in Figur 11A gezeigte Befestigungselement 144 umfasst einen Rücksprung 145. Das Befestigungselement 144 kann mittels des Rücksprungs 145 in der Aufsteckrichtung R₁₄₅ auf einen vorstehenden Abschnitt 13b des Tragrahmens 12 aufgesteckt werden, wie dies exemplarisch in Figur 5A und 5C gezeigt ist.

Wie das in Figur 6 gezeigte Befestigungselement ist auch dieses Befestigungselement 144 vorzugsweise im Wesentlichen symmetrisch aufgebaut (Symmetrieebene E).

Das in Figur 11A und 11B gezeigte Befestigungselement 144 umfasst weiterhin ein Klemmmittel 148, welches hier als Madenschraube gestaltet ist. Das Klemmmittel 148 ist dazu eingerichtet das Befestigungselement 144 an den vorstehenden Abschnitt 13b des Tragrahmens 12 zu klemmen. Somit kann die (gesteckte) Verbindung zwischen dem Tragrahmen 12 und dem Halteelement 140 gesichert werden. Im gezeigten Ausführungsbeispiel kann das Klemmmittel in den, den vorstehenden Abschnitt 13b des Tragrahmens 12 aufnehmenden Rücksprung 145 eingedreht werden, um den Tragrahmen 12 zu klemmen.

Zudem ist an dem Befestigungselement 144 des Halteelements 140 ein Kederschienenabschnitt 149 angeordnet. Im gezeigten Ausführungsbeispiel ist der Kederschienenabschnitt 149 an dem Befestigungselement 144 angeschraubt. Ebenso ist es möglich den Kederschienenabschnitt 149 integral mit dem Befestigungselement 144 auszuführen, oder auf andere Weise zu verbinden.

Der Kederschienenabschnitt 149 weist eine längliche Kedernut 149n auf, die so gestaltet ist, dass ein Kederelement einer Membranstruktur (nicht gezeigt) hineingeschoben und gehalten werden kann.

In der in den Figuren 11A und 11B gezeigten Ausführungsform ist der Kederschienenabschnitt 149 auf einer dem Rücksprung 145 gegenüberliegenden Seite des Befestigungselements 144 angeordnet.

Hierdurch kann ein weiterer Rücksprung 146 gebildet werden. Dieser weitere Rücksprung 146 kann dazu genutzt werden, einen vorstehenden Abschnitt 13a des Tragrahmens 12 aufnehmen. Insbesondere kann das Befestigungselement 144 so auf den vorstehenden Abschnitt 13a des Tragrahmens 12 aufgesteckt werden. Ebenso ist es möglich, da der Kederschienenabschnitt 149 auf das Befestigungselement 144 aufgeschraubt ist, einen vorstehenden Abschnitt 13a des Tragrahmens 12 im Rücksprung 146, d.h. zwischen dem Befestigungselement 144 und dem Kederschienenabschnitt 149 zu klemmen.

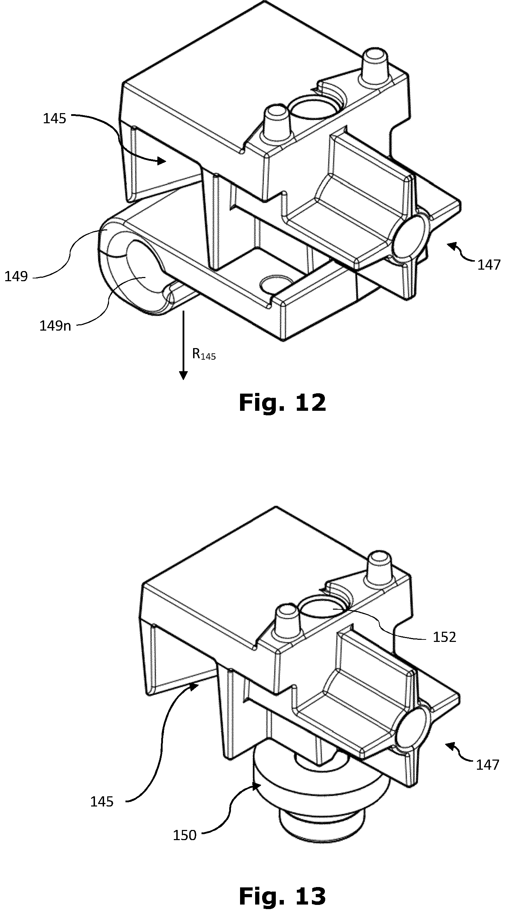

Wie Figur 12 verdeutlicht, ist diese Anordnung optional. Figur 12 zeigt ein weiteres Befestigungselement 144 eines Halteelements. Auch dieses Befestigungselement 144 kann, wie in den Figuren 5A und 5B gezeigt ist, mit einer Befestigungsstrebe 142 zusammenwirken. Hierfür ist optional ein Verbindungsabschnitt 147 vorgesehen.

Das in Figur 12 gezeigte Befestigungselement 144 umfasst einen Rücksprung 145. Das Befestigungselement 144 kann mittels des Rücksprungs 145 in der Aufsteckrichtung R₁₄₅ auf einen vorstehenden Abschnitt 13a, 13b des Tragrahmens 12 aufgesteckt werden.

Allerdings ist in dieser Ausführungsform ein Kederschienenabschnitt 149 so angeordnet, dass ein in den Rücksprung 145 aufgenommener Abschnitt 13b des Tragrahmens 12 blockiert wird. Dies bedeutet, dass das aufgesteckte Befestigungselement 144 nicht ohne Weiteres entgegen der Aufsteckrichtung vom Tragrahmen 12 abgezogen werden kann. Zusätzlich kann das in Figur 12 gezeigte Befestigungselement 144 ein Klemmmittel 148 umfassen, wie in Figur 11B gezeigt ist.

Fig. 13 zeigt das mit Bezug auf die Figuren 11A, 11B, 12 beschriebene Befestigungsmittel 144. Jedoch ist hier kein Kederschienenabschnitt 149 vorgesehen. Stattdessen wird in einen Gewindeabschnitt 152, der beispielsweise auch zum Anschrauben des Kederschienenabschnitts 149 dient, eine Schraube 150 eingedreht. Diese Schraube kann beispielsweise dazu verwendet werden, eine Plattenstruktur 110 am Befestigungsmittel 144 unmittelbar zu befestigen.

Einige der Ausführungsformen werden unter Bezugnahme auf die beigefügten Figuren ausführlicher beschrieben als andere. Andere Ausführungsformen sind jedoch ebenso in der vorliegenden Offenbarung enthalten. Die vorliegende Offenbarung sollte nicht so verstanden werden, dass sie nur auf die hier explizit dargelegten Ausführungsformen beschränkt ist; vielmehr werden diese Ausführungsformen als Beispiele angeführt, um dem Fachmann den Umfang des erfindungsgemäßen Gegenstandes zu vermitteln. Die vorliegende Erfindung kann natürlich auch auf andere Weise als die hierin dargelegte ausgeführt werden, ohne dass dadurch wesentliche Merkmale der Erfindung beeinträchtigt werden. Die vorliegenden Ausführungsformen sind in jeder Hinsicht als illustrativ und nicht einschränkend zu betrachten, sodass auch Abwandlungen der beschriebenen Ausführungsformen unter den Schutzbereich fallen können.

### Bezugszeichenliste

- 1: U nterbodenverkleid u ngssystem
- 10: Fahrzeuganhänger
- 12: Tragrahmen
- 13a, 13b: vorstehender Abschnitt des Tragrahmens
- 14: Deichsel
- 15a, 15b: Zugholm
- 16a, 16b: Radachse
- 17: Kupplung
- 18: Anhängeraufbau
- 20: Unterseite
- 30a, 30b: Bremse
- 32: Bremsseil
- 34: Bremsgestänge
- 40a, 40b: Rad
- 50: Zugfahrzeug
- 100: Unterbodenverkleidung
- 110: Plattenstruktur
- 111: Versteifungselement
- 112: Membranstruktur
- 114a, 114b: Unterbodenverkleidungsabschnitt
- 122: Öffnung (Zugang zu technischen Komponenten)
- 123: Verschluss
- 124: Öffnung (Zugang zu Stauraum)
- 130a, 130b: Luftleitstruktur
- 140: Halteelement
- 142: Befestigungsstrebe
- 142a: erstes Ende
- 142b: zweites Ende
- 144: Befestigungselement
- 145: Rücksprung (vertikal)
- 145a: Schräge
- 145b: Schräge
- 146: Rücksprung (horizontal)
- 146a: Schräge
- 146b: Schräge
- 147: Verbindungsabschnitt
- 148: Klemmmittel
- 149: Kederschienenabschnitt
- 149n: Kedernut
- 150: Schraube
- 152: Gewindeabschnitt
- E: Symmetrieebene
- R₁₄₅: Aufsteckrichtung
- R₁₄₆: Aufsteckrichtung

## Patentansprüche

1. Ein Fahrzeuganhänger (10), insbesondere ein PKW-Anhänger, wobei der Fahrzeuganhänger (10)
einen Tragrahmen (12) und eine Deichsel (14), sowie zumindest eine Radachse (16a, 16b) umfasst, wobei
der Tragrahmen (12) mit der Deichsel (14) und der zumindest einen Radachse (16a, 16b) verbunden ist, und wobei der Tragrahmen (12) dazu eingerichtet ist einen Anhängeraufbau (18) zu tragen, **dadurch gekennzeichnet, dass**
der Fahrzeuganhänger (10) weiterhin eine Unterbodenverkleidung (100) umfasst, wobei die Unterbodenverkleidung (100) so am Tragrahmen (12) angeordnet ist, dass eine Unterseite (20) des Fahrzeuganhängers (10) zumindest teilweise flächig verkleidet ist.

2. Der Fahrzeuganhänger (10) nach Anspruch 1, wobei
die Unterbodenverkleidung (100) weiterhin an der Deichsel (14), insbesondere an Zugholmen (15a, 15b) der Deichsel, angeordnet ist, sodass
eine Unterseite der Deichsel (14) zumindest teilweise flächig verkleidet ist, wobei
die Unterbodenverkleidung (100) optional in zumindest einem lateralen Bereich der Deichsel (14) einen im Wesentlichen schräg nach oben verlaufenden Unterbodenverkleidungsabschnitt (114a, 114b) aufweist.

3. Der Fahrzeuganhänger (10) nach einem der Ansprüche 1 oder 2, wobei die Unterbodenverkleidung (100) zumindest eine Luftleitstruktur (130a, 130b) aufweist, wobei die Luftleitstruktur so an der Unterbodenverkleidung (100) angeordnet ist, um
Kühlluft zu zumindest einer Bremse (30a, 30b) und/oder einer Radachse (16a, 16b) des Fahrzeuganhängers zu leiten und/oder um
die Bildung von Luftwirbeln an den drehenden Rädern (40a, 40b) zu reduzieren oder zu verhindern.

4. Der Fahrzeuganhänger (10) nach einem der Ansprüche 1 bis 3, wobei die Unterbodenverkleidung (100) eine Schaumstruktur umfasst, wobei die Schaumstruktur optional so in den Tragrahmen (12) eingebracht ist, dass die Unterseite (20) des Fahrzeuganhängers (10) zumindest teilweise flächig verkleidet ist, und/oder wobei
die Unterbodenverkleidung (100) zumindest eine Plattenstruktur (110) und/oder zumindest eine Membranstruktur umfasst, wobei die zumindest eine Plattenstruktur (110) und/oder Membranstruktur so an dem Tragrahmen (12) befestigt ist, dass die Unterseite (20) des Fahrzeuganhängers (10) zumindest teilweise flächig verkleidet ist.

5. Der Fahrzeuganhänger (10) nach Anspruch 4, wobei die Unterbodenverkleidung (100) weiterhin zumindest ein Halteelement (140) umfasst, und wobei das Halteelement (140) die zumindest eine Plattenstruktur (110) und/oder zumindest eine Membranstruktur direkt oder indirekt mit dem Tragrahmen (12) verbindet.

6. Der Fahrzeuganhänger (10) nach Anspruch 5, wobei
das Halteelement (140) zumindest ein Befestigungselement (144) aufweist, wobei das Befestigungselement (144) zumindest einen Rücksprung (145, 146) aufweist, und wobei
das Befestigungselement (144) dazu eingerichtet ist mittels des zumindest einen Rücksprungs (145, 146) auf einen vorstehenden Abschnitt (13a, 13b) des Tragrahmens (12) aufgesteckt zu werden, wobei das Befestigungselement (144) optional ein Klemmmittel (148) umfasst, welches dazu eingerichtet ist das Befestigungselement (144) an den vorstehenden Abschnitt (13a, 13b) des Tragrahmens (12) zu klemmen.

7. Der Fahrzeuganhänger (10) nach Anspruch 5 oder 6, wobei das Halteelement (140), insbesondere das Befestigungselement (144), einen Kederschienenabschnitt (149) umfasst.

8. Der Fahrzeuganhänger (10) nach einem der Ansprüche 5 bis 7, wobei
das Halteelement (140) eine Befestigungsstrebe (142) umfasst, wobei die Befestigungsstrebe (142) dazu eingerichtet ist eine Plattenstruktur (110) und/oder eine Membranstruktur zu halten, und wobei
die Befestigungsstrebe ein erstes Ende (142a) und ein zweites Ende (142b) aufweist, welches dem ersten Ende (142a) gegenüberliegt, wobei
ein Befestigungselement (144) mit dem ersten und/oder zweiten Ende (142a, 142b) verbunden ist, um die Befestigungsstrebe (142) an dem Tragrahmen (12) zu befestigen und/oder wobei
die Befestigungsstrebe (142) ein erstes Strebenteil und ein zweites Strebenteil umfasst, wobei das erste Strebenteil relativ zum zweiten Strebenteil verschiebbar eingerichtet ist, um die Länge der Befestigungsstrebe (142) einzustellen, und wobei
das erste Strebenteil relativ zum zweiten Strebenteil festlegbar eingerichtet ist, um eine eingestellte Länge der Befestigungsstrebe (144) zu fixieren.

9. Der Fahrzeuganhänger (10) nach einem der Ansprüche 1 bis 8, wobei die Unterbodenverkleidung (100) seitlich und/oder heckseitig über den Tragrahmen (12) übersteht und vorzugsweise zumindest bereichsweise an den Anhängeraufbau (18) anschließt.

10. Ein Unterbodenverkleidungssystem (1) zur Bereitstellung einer Unterbodenverkleidung (100) für einen Fahrzeuganhänger (10), insbesondere für einen Fahrzeuganhänger (10) nach einem der Ansprüche 1 bis 9, wobei das Unterbodenverkleidungssystem (1)
zumindest eine Plattenstruktur (110) und/oder zumindest eine Membranstruktur umfasst, wobei die zumindest eine Plattenstruktur (110) und/oder Membranstruktur so an einem Tragrahmen (12) des Fahrzeuganhängers (10) befestigbar ist, dass die Unterseite (20) des Fahrzeuganhängers (10) zumindest teilweise flächig verkleidet ist.

11. Das Unterbodenverkleidungssystem (1) nach Anspruch 10, wobei das
Unterbodenverkleidungssystem (1) weiterhin zumindest ein Halteelement (140) umfasst, und wobei das Halteelement (140) die zumindest eine Plattenstruktur (110) und/oder zumindest eine Membranstruktur direkt oder indirekt mit dem Tragrahmen (12) verbindet.

12. Das Unterbodenverkleidungssystem (1) nach Anspruch 11, wobei
das Halteelement (140) zumindest ein Befestigungselement (144) aufweist, wobei das Befestigungselement (144) zumindest einen Rücksprung (145, 146) aufweist, wobei
das Befestigungselement (144) dazu eingerichtet ist mittels des zumindest einen Rücksprungs (145, 146) auf einen vorstehenden Abschnitt des Tragrahmens (12) aufgesteckt zu werden, wobei
das Befestigungselement (144) optional ein Klemmmittel (148) umfasst, welches dazu eingerichtet ist das Befestigungselement (144) an den vorstehenden Abschnitt (13a, 13b) des Tragrahmens (12) zu klemmen.

13. Das Unterbodenverkleidungssystem (1) nach Anspruch 11 oder 12, wobei das Halteelement (140), insbesondere das Befestigungselement (144), einen Kederschienenabschnitt (149) umfasst.

14. Das Unterbodenverkleidungssystem (1) nach einem der Ansprüche 11 bis 13, wobei
das Halteelement (140) eine Befestigungsstrebe (142) umfasst, wobei die Befestigungsstrebe (142) dazu eingerichtet ist die Plattenstruktur (110) und/oder die Membranstruktur zu halten, und wobei
die Befestigungsstrebe ein erstes Ende (142a) und ein zweites Ende (142b) aufweist, welches dem ersten Ende (142a) gegenüberliegt, wobei
ein Haltelement (140) mit dem ersten und/oder zweiten Ende (142a, 142b) verbunden ist, um die Befestigungsstrebe (142) an dem Tragrahmen (12) zu befestigen und/oder wobei
die eine Befestigungsstrebe (142) ein erstes Strebenteil und ein zweites Strebenteil umfasst, wobei das erste Strebenteil relativ zum zweiten Strebenteil verschiebbar eingerichtet ist, um die Länge der Befestigungsstrebe (142) einzustellen, und wobei
das erste Strebenteil relativ zum zweiten Strebenteil festlegbar eingerichtet ist, um eine eingestellte Länge der Befestigungsstrebe (144) zu fixieren.

15. Das Unterbodenverkleidungssystem (1) nach einem der Ansprüche 10 bis 14, wobei
das Unterbodenverkleidungssystem (1) eine Schaumstruktur umfasst, wobei die Schaumstruktur vorzugsweise so in den Tragrahmen (12) einbringbar ist, dass die Unterseite (20) des Fahrzeuganhängers (10) zumindest teilweise flächig verkleidet ist und/oder wobei
die zumindest eine Plattenstruktur (110) eine Kunststoffplatte und/oder ein Metallblech umfasst, und/oder wobei die zumindest eine Membranstruktur eine Kunststoffmembran umfasst.
